# EUROPÄISCHE PATENTSCHRIFT

(11) **EP 3 350 473 B1**
(45) Veröffentlichungstag und Bekanntmachung des Hinweises auf die Patenterteilung: **01.01.2020**
(21) Anmeldenummer: 16790987.8
(22) Anmeldetag: 02.11.2016
(51) Int. Cl.: B60K 5/12, F16F 13/10

(54) **HYDROLAGER**
HYDRAULIC BEARING
PALIER HYDRAULIQUE

(30) Priorität: 04.11.2015 DE 102015118931
(43) Veröffentlichungstag der Anmeldung: 25.07.2018
(73) Patentinhaber: Vibracoustic GmbH, 64293 Darmstadt (DE)
(72) Erfinder: BECKMANN, Wolfgang, 64289 Darmstadt (DE); FARRENKOPF, Peter, 68519 Viernheim (DE); HELLY, Bjoern, 69514 Laudenbach (DE); STEIN, Kurt, 69509 Mörlenbach (DE)
(74) Vertreter: Flügel Preissner Schober Seidel
(86) Internationale Anmeldenummer: PCT/EP2016/076443
(87) Internationale Veröffentlichungsnummer: WO 2017/076914

(56) Entgegenhaltungen:
- EP-A1- 1 628 040
- DE-A1- 3 447 746
- GB-A- 2 354 813

## Beschreibung

Die vorliegende Erfindung betrifft ein Hydrolager, insbesondere zur Lagerung eines Kraftfahrzeugmotors an einer Fahrzeugkarosserie, umfassend ein Hydromodul mit einer Tragfeder, die einen Lagerkern abstützt, eine Arbeitskammer umschließt und sich an einem Außenring, an dem ein Deckel festgelegt ist, abstützt, einer von der Arbeitskammer durch eine Zwischenplatte getrennten und von einer Ausgleichsmembran begrenzten Ausgleichskammer, wobei die Ausgleichskammer und die Arbeitskammer mit einer Dämpfungsflüssigkeit gefüllt und über einen in der Zwischenplatte angeordneten Dämpfungskanal flüssigkeitsleitend miteinander verbunden sind, und ein das Hydromodul aufnehmendes Gehäuse, wobei der Außenring einen radialen Vorsprung aufweist, wobei der radiale Vorsprung mit einer gummierten axialen Anlagefläche und einer nicht gummierten radialen Außenfläche versehen ist, und wobei zwischen dem Hydromodul und dem Gehäuse ein radiales Spiel vorgesehen ist. Des Weiteren betrifft die Erfindung ein Verfahren zur Montage eines derartigen Hydrolagers.

Derartige hydraulisch dämpfende Lager werden insbesondere zur Abstützung eines Kraftfahrzeugmotors an einer Fahrzeugkarosserie verwendet, um einerseits die von Fahrbahnunebenheiten hervorgerufenen Schwingungen zu dämpfen und andererseits akustische Schwingungen zu isolieren. Die von Fahrbahnunebenheiten hervorgerufenen Schwingungen werden durch ein hydraulisches System gedämpft, wobei das hydraulische System durch die flüssigkeitsgedämpfte Arbeitskammer, die Ausgleichskammer und den die beiden Kammern miteinander verbindenden Dämpfungskanal gebildet wird. Die Funktionsweise des hydraulischen Systems kann wie folgt beschrieben werden: Die Arbeitskammer wird durch eine Bewegung der Tragfeder vergrößert oder verkleinert, wobei die in der Arbeitskammer befindliche Flüssigkeit über dem Dämpfungskanal in die Ausgleichskammer gedrückt wird. Die im Dämpfungskanal schwingende Flüssigkeit bewirkt eine Dämpfung. Hydrolager der genannten Art weisen üblicherweise ein Hydromodul und ein Gehäuse, das das Hydromodul aufnimmt, auf.

Ein solches Hydrolager wird beispielsweise in der EP 1 628 040 A1 offenbart. Bei dem dort offenbarten Hydrolager wird das Hydromodul mit einer translatorischen Bewegung in das Gehäuse eingeführt. Das so montierte Hydrolager wird anschließend durch Bördeln des Gehäuses verschlossen. Der Lageraußenring weist eine radiale Gummierung auf, um eine sichere Fixierung im Gehäuse in Umfangsrichtung zu bewirken. Hydromodul und Gehäuse sind bei dem offenbarten Hydrolager kraftschlüssig verbunden.

Die DE 34 47 746 A1 offenbart ein 2-Kammer-Motorlager mit hydraulischer Dämpfung. Das Lager umfasst ein Gehäuse, das aus zwei Gehäuseteilen besteht, und eine Lagerplatte, die mit einer Wandung aus elastomerem Material verbunden ist. An der Wandung ist ein Gehäusering befestigt. Der Gehäusering weist eine zu der Zwischenplatte des Lagers orientierte axiale Fläche auf, die mit dem elastomeren Material der Wandung überzogen ist.

Aufgrund der konstruktiven Ausgestaltung des Hydromoduls kann dieses häufig nur mittels einer Drehbewegung in das Gehäuse eingesetzt werden. Hierzu muss zwischen dem Hydromodul und dem Gehäuse ein gewisses Spiel vorhanden sein.

Es ist daher Aufgabe der vorliegenden Erfindung, ein Hydrolager der eingangs genannten Art vorzuschlagen, das mittels einer Drehbewegung im Gehäuse montierbar und hinsichtlich der Geräuschentwicklung bei Querbelastung verbessert ist.

Diese Aufgabe wird durch ein Hydrolager nach Anspruch 1 und durch ein Verfahren nach Anspruch 7 gelöst. Vorteilhafte Ausgestaltungen des Hydrolagers sind Gegenstand der Unteransprüche.

Bei dem erfindungsgemäßen Hydrolager ist das Hydromodul durch eine Drehbewegung in dem Gehäuse festgelegt.

Durch die Gummierung an der axialen Anlagefläche werden Bauteiltoleranzen ausgeglichen, sodass an einer axialen Anlage zwischen Gehäuse und Hydromodul ein Flächenkontakt besteht. Durch die somit erzielte Erhöhung der Kontaktfläche im Vergleich zu einem toleranzbedingten linienförmigen Kontakt oder nur punktuellen Kontakt sowie durch den höheren Reibwert des Gummis im Vergleich zum Material des Außenrings wird ein an dieser Stelle im Betrieb stattfindender Übergang von Haftreibung zu Gleitreibung infolge von Querkräften in einen technisch nicht relevanten Bereich verlagert. Für den Kunden wahrnehmbare unerwünschte Geräusche, die durch den sogenannten Stick-Slip-Effekt hervorgerufen werden, sind dadurch unterbunden. Die nicht gummierte radiale Außenfläche lässt eine Drehbewegung des Hydromoduls in dem Gehäuse zu.

Vorteilhaft weist der Außenring einen axial abragenden Flansch mit einer Ringnut zum Einklipsen eines Deckels auf. Somit kann eine einfache Montage des Deckels erzielt werden.

In einer vorteilhaften Ausgestaltung liegt das den Außenring und einen Klips des Deckels umgreifende Gehäuse an der axialen Anlagefläche des Außenrings an.

Vorteilhaft ist der Außenring aus einem Kunststoff, insbesondere Polyamid, hergestellt.

Vorteilhaft beträgt die Dicke der Gummierung der axialen Anlagefläche zwischen 0,5 mm und 2 mm.

Dadurch, dass zwischen dem Hydromodul und dem Gehäuse ein radiales Spiel vorgesehen ist, kann das Hydromodul bei der Montage des Hydrolagers in dem Gehäuse um einen Montagewinkel leichter verdreht werden.

An dem Gehäuse kann ein Anschlag vorgesehen sein, der die Drehbewegung des Hydromoduls begrenzt. Weiterhin kann am Gehäuse eine Kulissenführung vorgesehen sein, die die Drehbewegung des Hydromoduls führt.

Bei einer vorteilhaften Ausgestaltung ist das Hydromodul an dem Gehäuse durch Bördeln fixiert. In anderen Ausgestaltungen ist es möglich und üblich, das Hydromodul durch eine Klipsverbindung oder durch Verklemmen zwischen Gehäuse und Karosserie festzulegen.

Weiterhin betrifft die Erfindung ein Verfahren zur Montage eines Hydrolagers umfassend ein Hydromodul und ein das Hydromodul aufnehmendes Gehäuse, wobei das Verfahren die folgenden Verfahrensschritte umfasst:
a) Einführen des vormontierten Hydromoduls in das Gehäuse derart, dass Anschlagpuffer durch die Verbindungsöffnung geführt werden können.
b) Verdrehen des Hydromoduls relativ zu dem Gehäuse um einen Montagewinkel, so dass das Gehäuse an der axialen Anlagefläche anliegt und den Außenring und einen Klips des Deckels umgreift.
c) Bördeln des Gehäuses zum Festlegen und Sichern des Hydromoduls in dem Gehäuse in axialer Richtung.

Nachfolgend wird die Erfindung anhand eines Ausführungsbeispiels näher beschrieben, das in den Zeichnungen schematisch dargestellt ist. Hierbei zeigt:
- Fig. 1: einen Vertikalschnitt durch ein erfindungsgemäßes Hydrolager;
- Fig. 2: eine vergrößerte Schnittansicht der Tragfeder mit dem einvulkanisierten Außenring, wobei andere Bauteile weggelassen wurden;
- Fig. 3: eine vergrößerte Ansicht des in Fig. 1 gestrichelt umrandeten Bereichs.

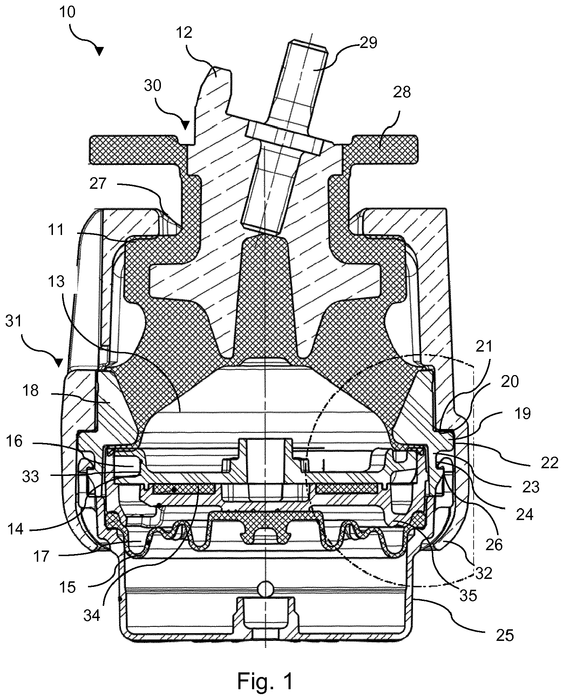

Fig. 1 zeigt ein Hydrolager 10 zur Lagerung eines nicht dargestellten Kraftfahrzeugmotors an einer nicht dargestellten Fahrzeugkarosserie. Das Hydrolager 10 weist eine Tragfeder 11 aus einem elastomeren Werkstoff zur Abstützung eines einvulkanisierten Lagerkerns 12 auf. An dem Lagerkern 12 ist der Motor befestigt. In den Lagerkern 12 ist eine Verschraubung 29 eingelassen.

Die Tragfeder 11 begrenzt eine Arbeitskammer 13, die mittels einer Zwischenplatte 14 von einer Ausgleichskammer 17 getrennt ist. Die Ausgleichskammer 17 wird von einer Ausgleichsmembran 15 begrenzt, die auch als Rollbalg bezeichnet wird. Die Kammern 13 und 17 sind mit einer hydraulischen Flüssigkeit befüllt und über einen in der Zwischenplatte 14 angeordneten Dämpfungskanal 16 flüssigkeitsleitend miteinander verbunden.

Die Zwischenplatte 14 weist eine obere Düsenplatte 33 und eine untere Düsenplatte 35 auf. Die obere Düsenplatte 33 und die untere Düsenplatte 35 sind aus Kunststoff hergestellt. Zwischen der oberen Düsenplatte 33 und der unteren Düsenplatte 35 ist eine Entkopplungsmembran 34 aufgenommen.

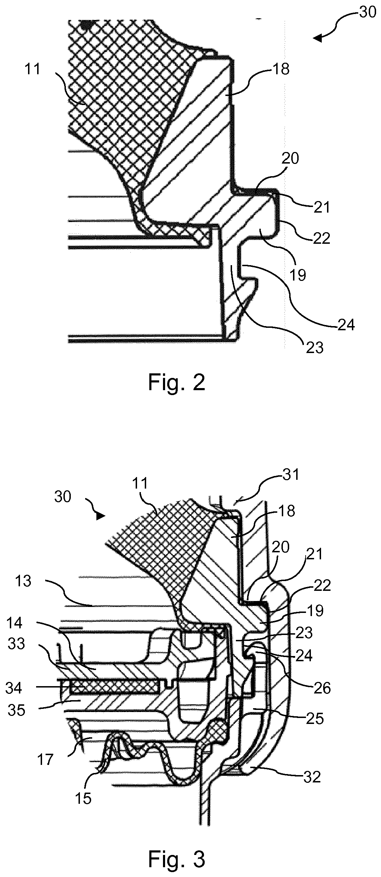

An die Tragfeder 11 ist ein Außenring 18 anvulkanisiert, der beispielsweise aus Polyamid besteht. Der Außenring 18 weist einen radialen Vorsprung 19 mit einer axialen Anlagefläche 20 und einer radialen Außenfläche 22 auf. Auf der axialen Anlagefläche 20 ist eine Gummierung 21 angebracht, wie insbesondere in Fig. 2 gut erkennen ist. Weiter weist der Außenring 18 einen axial abragenden Flansch 23 mit einer Ringnut 24 auf. Die Tragfeder 11 mit dem Außenring 18 sowie ein Deckel 25 sind durch einen Klips 26 des Deckels 25, der in die Ringnut 24 des Flansches 23 eingreift, miteinander verbunden und schließen die Zwischenplatte 14 und die Ausgleichsmembran 15 zwischen sich ein und bilden gemeinsam das Hydromodul 30.

Wie in Fig. 1 dargestellt, ist das Hydromodul 30 in das Gehäuse 31 eingeführt. Fig. 1 stellt eine Ansicht des fertig montierten Hydrolagers 10 nach Durchführen einer Rotationsbewegung des Hydromoduls 30 in dem Gehäuse 31 dar.

Das Hydromodul 30 wird bei der Montage zunächst mit einer translatorischen Bewegung in das Gehäuse 31 eingeführt, so dass die Anschlagpuffer 28 durch die Verbindungsöffnung 27 geführt werden können. Anschließend wird das Hydromodul 30 mit einer rotatorischen Bewegung relativ zu dem Gehäuse 31 um einen Montagewinkel gedreht, sodass das Gehäuse 31 an der axialen Anlagefläche 20 anliegt und den Außenring 18 und den Klips 26 des Deckels 25 umgreift. Schließlich wird die Montage des Hydrolagers 10 durch Umbördeln des Gehäuses 31 zum Festlegen und Sichern des Hydromoduls 30 in dem Gehäuse 31 abgeschlossen.

Im montierten Zustand ragen die Anschlagpuffer 28 über die Verbindungsöffnung 27 hinaus, wie insbesondere in Fig. 1 zu sehen ist. Das Gehäuse 31 liegt in axialer Richtung an der Gummierung 21 der axialen Anlagefläche 20 an. Durch die Elastizität des Gummis werden die Bauteiltoleranzen des Außenrings 18 und des Gehäuses 31 ausgeglichen, sodass der Außenring 18 und das Gehäuse 31 über eine definierbare Ringfläche in Kontakt sind. Weiter ist zwischen dem Gehäuse 31 und dem Außenring 18 in radialer Richtung Spiel vorgesehen.

Das Gehäuse 31 umschließt den Außenring 18 sowie den Klips 26 des Deckels 25 vollständig. Schließlich ist das Hydromodul 30 in dem Gehäuse 31 durch Bördeln des Gehäuses 31 festgelegt, sodass ein Bördel 32 am Ende des Gehäuses 31 gebildet wird.

Durch das Bördeln wird das Hydromodul 30 zusätzlich an das Gehäuse 31 herangezogen, wodurch die an der axialen Anlagefläche 20 und an der Gummierung 21 vorherrschende Flächenpressung erhöht wird. Dies verlagert zusätzlich den Übergang von Haftreibung zu Gleitreibung.

Die Fig. 2 und 3 zeigen weitere Ansichten des Außenrings 18. In Fig. 2 wurden insbesondere die umgebenden Elemente, also das Gehäuse 31, die Zwischenplatte 14, der Deckel 25 und die Ausgleichsmembran 15 weggelassen. Fig. 3 zeigt einen vergrößerten Ausschnitt des den Außenring 18 umgebenden Bereichs.

Zusammenfassend wird bei dem erfindungsgemäßen Hydrolager aufgrund der nicht gummierten radialen Außenfläche 22 des Außenrings 18 ein Einsetzen des Hydromoduls 30 in das Gehäuse 31 mit einer rotatorischen Bewegung erleichtert.

Die gummierte axiale Anlagefläche 20 des Außenrings 18 ist im montierten Zustand an das Gehäuse 31 gepresst. Dadurch wird bei Querbelastung der Übergang von Haftreibung zu Gleitreibung an dieser Kontaktfläche verlagert, sodass unerwünschte Geräusche, die bei einer Relativbewegung des Außenrings 21 zu dem Gehäuse 31 durch den sogenannten Stick-Slip-Effekt hervorgerufen werden, unterbunden sind.

### Bezugszeichenliste

- 10: Hydrolager
- 11: Tragfeder
- 12: Lagerkern
- 13: Arbeitskammer
- 14: Zwischenplatte
- 15: Ausgleichsmembran
- 16: Dämpfungskanal
- 17: Ausgleichskammer
- 18: Außenring
- 19: radialer Vorsprung
- 20: axiale Anlagefläche
- 21: Gummierung
- 22: radiale Außenfläche
- 23: Flansch
- 24: Ringnut
- 25: Deckel
- 26: Klips
- 27: Verbindungsöffnung
- 28: Anschlagpuffer
- 29: Verschraubung
- 30: Hydromodul
- 31: Gehäuse
- 32: Bördel
- 33: obere Düsenplatte
- 34: Entkopplungsmembran
- 35: untere Düsenplatte

## Patentansprüche

1. Hydrolager (10), insbesondere zur Lagerung eines Kraftfahrzeugmotors an einer Fahrzeugkarosserie, umfassend
ein Hydromodul (30) mit einer Tragfeder (11), die einen Lagerkern (12) abstützt, eine Arbeitskammer (13) umschließt und sich an einem Außenring (18), an dem ein Deckel (25) festgelegt ist, abstützt, einer von der Arbeitskammer (13) durch eine Zwischenplatte (14) getrennten und von einer Ausgleichsmembran (15) begrenzten Ausgleichskammer (17), wobei die Ausgleichskammer (17) und die Arbeitskammer (13) mit einer Dämpfungsflüssigkeit gefüllt und über einen in der Zwischenplatte (14) angeordneten Dämpfungskanal (16) flüssigkeitsleitend miteinander verbunden sind, und
ein das Hydromodul (30) aufnehmendes Gehäuse (31), wobei der Außenring (18) einen radialen Vorsprung (19) aufweist, wobei der radiale Vorsprung (19) mit einer gummierten axialen Anlagefläche (20) und einer nicht gummierten radialen Außenfläche (22) versehen ist, und wobei zwischen dem Hydromodul (30) und dem Gehäuse (31) ein radiales Spiel vorgesehen ist, **dadurch gekennzeichnet, dass** das Hydromodul (30) durch eine Drehbewegung in dem Gehäuse (31) festgelegt ist.

2. Hydrolager (10) nach Anspruch 1, **dadurch gekennzeichnet, dass** der Außenring (18) einen axial abragenden Flansch (23) mit einer Ringnut (24) zum Einklipsen des Deckels (25) aufweist.

3. Hydrolager (10) nach Anspruch 1 oder 2, **dadurch gekennzeichnet, dass** das den Außenring (18) und einen Klips (26) des Deckels (25) umgreifende Gehäuse (31) an der axialen Anlagefläche (20) des Außenrings (18) anliegt.

4. Hydrolager (10) nach einem der vorstehenden Ansprüche, **dadurch gekennzeichnet, dass** der Außenring (18) aus einem Kunststoff, insbesondere Polyamid, hergestellt ist.

5. Hydrolager (10) nach einem der vorstehenden Ansprüche, **dadurch gekennzeichnet, dass** die Dicke der Gummierung (21) der axialen Anlagefläche (20) zwischen 0,5 mm und 2 mm beträgt.

6. Hydrolager (10) nach einem der vorstehenden Ansprüche, **dadurch gekennzeichnet, dass** das Hydromodul (30) an dem Gehäuse (31) durch Bördeln fixiert ist.

7. Verfahren zur Montage eines Hydrolagers (10) nach einem der vorstehenden Ansprüche umfassend ein Hydromodul (30) und ein das Hydromodul (30) aufnehmendes Gehäuse (31), wobei das Verfahren die folgenden Verfahrensschritte umfasst:
(a) Einführen des vormontierten Hydromoduls (30) in das Gehäuse (31) derart, dass Anschlagpuffer (28) durch die Verbindungsöffnung (27) geführt werden können.
(b) Verdrehen des Hydromoduls (30) relativ zu dem Gehäuse (31) um einen Montagewinkel, sodass das Gehäuse (31) an der axialen Anlagefläche (20) anliegt und den Außenring (18) und einen Klips (26) des Deckels (25) umgreift.
(c) Umbördeln des Gehäuses (31) zum Festlegen und Sichern des Hydromoduls (30) in dem Gehäuse (31) in axialer Richtung.

## Claims

1. Hydromount (10), in particular for mounting a motor vehicle engine on a vehicle body, comprising:
a hydromodule (30) having a supporting spring (11) which supports a mount core (12), encloses a working chamber (13) and is supported on an outer ring (18) to which a cover (25) is fixed, a compensation chamber (17) separated from the working chamber (13) by an intermediate plate (14) and delimited by a compensation diaphragm (15), the compensation chamber (17) and the working chamber (13) being filled with a damping liquid and being connected to one another in a liquid-conducting manner via a damping channel (16) arranged in the intermediate plate (14), and
a housing (31) accommodating the hydraulic module (30), wherein the outer ring (18) has a radial projection (19), wherein the radial projection (19) is provided with a rubberized axial abutment surface (20) and a non-rubberized radial outer surface (22), and wherein a radial clearance is provided between the hydromodule (30) and the housing (31),
**characterized in that** the hydromodule (30) is fixed in the housing (31) by a rotational movement.

2. Hydromount (10) according to claim 1, **characterised in that** the outer ring (18) has an axially projecting flange (23) having an annular groove (24) for clipping in the cover (25).

3. Hydromount (10) according to claim 1 or 2, **characterised in that** the housing (31) enclosing the outer ring (18) and a clip (26) of the cover (25) rests against the axial abutment surface (20) of the outer ring (18).

4. Hydromount (10) according to any of the preceding claims, **characterised in that** the outer ring (18) is made of a plastics material, in particular polyamide.

5. Hydromount (10) according to any of the preceding claims, **characterised in that** the thickness of the rubber coating (21) of the axial abutment surface (20) is between 0.5 mm and 2 mm.

6. Hydromount (10) according to any of the preceding claims, **characterised in that** the hydromodule (30) is fixed to the housing (31) by flanging.

7. Method of mounting a hydromount (10) according to any one of the preceding claims comprising a hydromodule (30) and a housing (31) accommodating the hydromodule (30), the method comprising the following method steps:
(a) inserting the pre-assembled hydromodule (30) into the housing (31) such that stop buffers (28) can be passed through the connecting opening (27);
(b) rotating the hydromodule (30) relative to the housing (31) by a mounting angle so that the housing (31) rests against the axial abutment surface (20) and encloses the outer ring (18) and a clip (26) of the cover (25);
(c) flanging the housing (31) to fix and secure the hydromodule (30) in the housing (31) in the axial direction.

## Revendications

1. Support hydraulique (10), en particulier pour le montage d'un moteur de véhicule automobile sur une carrosserie de véhicule, comportant
un module hydraulique (30) pourvu d'un ressort porteur (11) qui supporte un cœur de palier (12), entoure une chambre de travail (13) et s'appuie contre une bague extérieure (18) sur laquelle est immobilisé un couvercle (25), une chambre de compensation (17) séparée de la chambre de travail (13) par une plaque intermédiaire (14) et délimitée par une membrane de compensation (15),
la chambre de compensation (17) et la chambre de travail (13) étant remplies d'un liquide d'amortissement et étant reliées l'une à l'autre en communication fluidique par un canal d'amortissement (16) disposé dans la plaque intermédiaire (14), et
un boîtier (31) recevant le module hydraulique (30),
la bague extérieure (18) présentant une saillie radiale (19), la saillie radiale (19) étant pourvue d'une surface d'appui axiale (20) caoutchoutée et d'une surface extérieure radiale (22) non caoutchoutée, et
un jeu radial étant prévu entre le module hydraulique (30) et le boîtier (31),
**caractérisé en ce que**
le module hydraulique (30) est immobilisé dans le boîtier (31) par un mouvement de rotation.

2. Support hydraulique (10) selon la revendication 1,
**caractérisé en ce que**
la bague extérieure (18) comprend une bride (23) axialement en saillie et pourvue d'une rainure annulaire (24) pour encliqueter le couvercle (25).

3. Support hydraulique (10) selon la revendication 1 ou 2,
**caractérisé en ce que**
le boîtier (31) entourant la bague extérieure (18) et un clip (26) du couvercle (25) prend appui contre la surface d'appui axiale (20) de la bague extérieure (18).

4. Support hydraulique (10) selon l'une des revendications précédentes,
**caractérisé en ce que**
la bague extérieure (18) est réalisée en une matière plastique, en particulier en polyamide.

5. Support hydraulique (10) selon l'une des revendications précédentes,
**caractérisé en ce que**
l'épaisseur de caoutchouc (21) de la surface d'appui axiale (20) est comprise entre 0,5 mm et 2 mm.

6. Support hydraulique (10) selon l'une des revendications précédentes,
**caractérisé en ce que**
le module hydraulique (30) est fixé au boîtier (31) par sertissage.

7. Procédé de montage d'un support hydraulique (10) selon l'une des revendications précédentes, comportant un module hydraulique (30) et un boîtier (31) recevant le module hydraulique (30), le procédé comprenant les étapes suivantes consistant à :
(a) introduire le module hydraulique (30) pré-assemblé dans le boîtier (31), de telle sorte que des tampons de butée (28) peuvent être passés à travers l'ouverture de liaison (27),
(b) faire tourner le module hydraulique (30) par rapport au boîtier (31) d'un angle de montage, de sorte que le boîtier (31) prend appui contre la surface d'appui axiale (20) et entoure la bague extérieure (18) et un clip (26) du couvercle (25),
(c) sertir le boîtier (31) pour immobiliser et bloquer le module hydraulique (30) en direction axiale dans le boîtier (31).
